# EUROPEAN PATENT APPLICATION

(11) **EP 1 439 288 A1**
(43) Date of publication of application: **21.07.2004**
(21) Application number: 03292946.5
(22) Date of filing: 26.11.2003
(51) Int. Cl.: F01N 3/28, B01J 35/04, B01J 37/02

(54) **Exhaust-gas purifying apparatus**

(30) Priority: 19.12.2002 JP 2002368089
(71) Applicant: Cataler Corporation, Ogasa-gun, Shizuoka-ken, 437-1492 (JP)
(72) Inventor: Shirahata, Junya, Cataler Corporation, Ogasa-gun Shizuoka-ken, 437-1492 (JP); Sato, Masayasu, Cataler Corporation, Ogasa-gun Shizuoka-ken, 437-1492 (JP); Kato, Yasuo, Cataler Corporation, Ogasa-gun Shizuoka-ken, 437-1492 (JP)
(74) Representative: Geismar, Thierry

(57) **Abstract**

An exhaust-gas purifying apparatus includes a metallic mantle (1), a plurality of metallic supports (2,2'), and a catalytic layer (12). The supports (2,2') are fixed at predetermined intervals in the mantle (1). The catalytic layer (12) is loaded on the inner peripheral surface of the mantle (1) and the surface of the supports. Not only the exhaust-gas purifying apparatus can maintain the high exhaust-gas purifying ability, but also is improved in terms of the longevity because it is inhibited from corroding.

## Description

### BACKGROUND OF THE INVENTION

### Field of the Invention

The present invention relates to an exhaust-gas purifying apparatus.

### Description of the Related Art

In order to purify exhaust gases emitted from automobiles and motorcycles, exhaust-gas purifying apparatuses have been used. There are many types of exhaust-gas purifying apparatuses such as thermal reactor-system, lean burning-system, engine modification-system, and catalyst-system exhaust-gas purifying apparatuses. Among them, catalyst-system exhaust-gas purifying apparatuses have been used extensively.

Catalyst-system exhaust-gas purifying apparatuses purify exhaust gases by using catalytic precious metals such as Pt, Rh and Pd. In catalyst-system exhaust-gas purifying apparatuses, exhaust-gas purifying catalysts are used which are made in the following manner. A catalytic layer is formed on a surface of a catalyst support with activated alumina such as γ-alumina. Then, one or more catalytic precious metals are loaded on the catalytic layer.

As for the materials of catalyst supports, heat-resistant materials are used because catalyst supports are exposed to high-temperature exhaust gases. As such materials, it is possible to name ceramics, such as cordierite, heat-resistant metals, such as stainless steels.

Catalyst supports made of ceramics suffer from such disadvantages that they are susceptible to mechanical shocks and exhibit large emission resistance. Accordingly, catalyst supports made of metals have come to be used due to the reasons that the pressure loss of exhaust systems should be reduced or the heat resistance of catalyst supports should be improved.

An exhaust-gas purifying apparatus provided with a metallic catalyst support can be manufactured in the following manner, for example. A steel stock is rolled as a foil-shaped or sheet-shaped workpiece. The steel stock can be SUS304 (as per Japanese Industrial Standard (JIS), i.e., 18Cr-8Ni austenic stainless steel), or SUS430 (as per JIS, i.e., 16Cr ferritic stainless steel). The resulting foil-shaped or sheet-shaped workpiece is processed into a metallic catalyst support. Then, a catalytic layer is formed on a surface of the resultant metallic catalyst support. Finally, one or more catalytic precious metals are loaded on the catalytic layer. Thus, an exhaust-gas purifying apparatus provided with a metallic catalyst support is completed.

Depending on the shapes of catalyst supports, exhaust-gas purifying apparatuses can be divided into monolithic, granular, honeycomb-shaped and pipe-shaped exhaust-gas purifying apparatuses.

In honeycomb-shaped exhaust-gas purifying apparatuses, there is a problem in that metallic catalyst supports might be melted and damaged by misfires which are transmitted from internal combustion engines. Specifically, when metallic catalyst supports are melted, the effective loading amount of catalytic precious metals might be decreased, or honeycomb-shaped cells might be clogged to lower the exhaust-gas purifying ability of honeycomb-shaped exhaust-gas purifying apparatuses.

Moreover, in pipe-shaped exhaust-gas purifying apparatuses, the axial length should be prolonged in order to secure a desirable exhaust-gas purifying ability. Accordingly, the boardability problem might associate with pipe-shaped exhaust-gas purifying apparatuses. In addition, when the axial length of pipe-shaped exhaust-gas purifying apparatuses is prolonged, the exhaust-gas temperature might be dropped to lower the exhaust-gas purifying ability of pipe-shaped exhaust-gas purifying apparatuses.

Consequently, exhaust-gas purifying apparatuses have been developed in order to solve the problems. For example, such exhaust-gas purifying apparatuses are disclosed in Japanese Patent No. 3,118,519, Japanese Unexamined Patent Publication (KOKAI) No. 7-328,452, Japanese Unexamined Patent Publication (KOKAI) No. 2001-38,223, Japanese Unexamined Utility Model Publication (KOKAI) No. 2-83,320, Japanese Utility Model Registration No. 2,573,291, and Japanese Utility Model Registration No. 2,581,107.

Japanese Patent No. 3,118,519 discloses a catalyst in which a plurality of metallic honeycomb core structures are disposed in a metallic mantle in a separated manner.

Japanese Unexamined Patent Publication (KOKAI) No. 7-328,452 discloses a catalyst which comprises a mantle, a first honeycomb structure disposed in the mantle, and second honeycomb structures disposed on the opposite sides of the first honeycomb structure and joined to the mantle.

Japanese Unexamined Patent Publication (KOKAI) No. 2001-38,223 discloses a process for producing a catalyst support in which a plurality of metallic honeycomb structures are held at predetermined intervals in a metallic case, and thereafter the metallic case is cut at parts at which no metallic honeycomb structures are disposed.

Japanese Unexamined Utility Model Publication (KOKAI) No. 2-83,320 discloses a catalyst in which a plurality of honeycomb core structures are fastened in a metallic case in a separated manner.

Japanese Utility Model Registration No. 2,573,291 discloses a catalyst which comprises a mantle, and a plurality honeycomb structures made by superimposing a flat metallic foil and a corrugated metallic foil and winding them, and fixed at predetermined intervals in the mantle. In particular, the catalyst is characterized in that the mantle and the honeycomb structures are joined at positions at which the first joints between the flat metallic foil and the corrugated metallic foil, which make the honeycomb structures, and the second joints between the honeycomb structures and the mantle do not overlap.

Japanese Utility Model Registration No. 2,581,107 discloses a catalyst in which a plurality of honeycomb structures manufactured to a length of from 10 to 30 mm are fixed at intervals of 10 mm or more in a mantle.

Thus, the six patent or utility model publications disclose catalysts which comprise a mantle and a plurality of honeycomb structures fixed in the mantle. In these catalysts, turbulence occurs in the flow of exhaust gases when the exhaust gases pass the honeycomb structures which are disposed on the earlier stages or the upstream sides. Accordingly, the exhaust gases are likely to contact with the surface of the honeycomb structures which are disposed on the later stages or the downstream sides. As a result, the catalysts are improved in terms of the exhaust-gas purifying ability.

However, the catalysts disclosed in the six patent or utility model publications suffer from a problem in that corrosion occurs at portions of the mantles which are positioned at spaces between the honeycomb structures. Specifically, exhaust gases which are emitted from combustion engines used in motorbikes are oxidative, because they include water in a relatively large content. The oxidative exhaust gases have corroded the mantles.

### SUMMARY OF THE INVENTION

The present invention has been developed in view of the aforementioned circumstances. It is therefore an object of the present invention to provide an exhaust-gas purifying apparatus which can inhibit the degradation of the catalytic ability resulting from the corrosion, while maintaining the high exhaust-gas purifying ability.

The inventors of the present invention studied exhaust-gas purifying apparatuses, which comprised a mantle and a plurality of supports fixed at predetermined intervals in the mantle, in order to achieve the aforementioned object. As a result, they found out that it is possible to achieve the object when a catalytic layer is formed on the entire inner surface of a mantle in which a plurality of supports are fixed at predetermined intervals. Thus, they completed the present invention.

For example, an exhaust-gas purifying apparatus according to the present invention comprises:
a metallic mantle;
a plurality of metallic supports fixed at predetermined intervals in the mantle; and
a catalytic layer loaded on the inner peripheral surface of the mantle and the surface of the supports.

In the present exhaust-gas purifying apparatus, the superficial area on which the catalytic layer is formed is enlarged because the catalytic layer is loaded on the inner peripheral surface of the mantle as well. Accordingly, the present exhaust-gas purifying apparatus is upgraded in terms of the exhaust-gas purifying ability. Moreover, exhaust gases do not contact with the mantle directly because the catalytic layer is formed on the inner peripheral surface of the mantle. Consequently, the mantle is inhibited from corroding. As a result, not only the present exhaust-gas purifying apparatus can maintain the high exhaust-gas purifying ability, but also is improved in terms of the longevity because it is inhibited from corroding.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is a drawing for illustrating a honeycomb-shaped exhaust-gas purifying apparatus according to Example No. 1 of the present invention;
Fig. 2 is a drawing for illustrating the arrangement of the honeycomb-shaped exhaust-gas purifying apparatus according to Example No. 1;
Fig. 3 is a drawing for illustrating the arrangement of a honeycomb-shaped exhaust-gas purifying apparatus according to Example No. 2 of the present invention;
Fig. 4 is a drawing for illustrating the arrangement of a honeycomb-shaped exhaust-gas purifying apparatus according to Example No. 3 of the present invention;
Fig. 5 is a drawing for illustrating the arrangement of a honeycomb-shaped exhaust-gas purifying apparatus according to Example No. 4 of the present invention;
Fig. 6 is a drawing for illustrating the arrangement of a honeycomb-shaped exhaust-gas purifying apparatus according to Example No. 5 of the present invention;
Fig. 7 is a drawing for illustrating the arrangement of a honeycomb-shaped exhaust-gas purifying apparatus according to Example No. 6 of the present invention;
Fig. 8 is a drawing for illustrating the arrangement of a honeycomb-shaped exhaust-gas purifying apparatus according to Comparative Example;
Fig. 9 is a graph for illustrating the results of measurements on CO conversions which were exhibited by the unused honeycomb-shaped exhaust-gas purifying apparatuses according to Example Nos. 1 through 6 as well as Comparative Example; and
Fig. 10 is a graph for illustrating the results of measurements on CO conversions which were exhibited by the honeycomb-shaped exhaust-gas purifying apparatuses according to Example Nos. 1 through 6 as well as Comparative Example after they were subjected to a durability test.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

The present exhaust-gas purifying apparatus comprises a mantle, supports, and a catalytic layer.

The supports are fixed in the mantle, and exhaust gases pass through the inside of the mantle at least when purifying exhaust gases. As for the mantle, it is possible to use mantles composed of heat-resistant metals which have been used in conventionally known pipe-shaped catalysts.

The supports are component parts which are disposed in the mantle.

The catalytic layer is loaded on the inner peripheral surface of the mantle and the surface of the supports. The catalytic layer comprises a catalytic ingredient which purifies exhaust gases when it contacts with exhaust gases. It is possible to purify exhaust gases on the entire inner surface of the mantle as well because the catalytic layer is loaded on the inner peripheral surface of the mantle and the surface of the supports. As for the catalytic layer, it is possible to use conventionally known catalytic layers.

Note that the catalytic layer is loaded on the inner peripheral surface of the mantle, inner peripheral surface which is positioned at the space between a plurality of the supports. Accordingly, the superficial area of the catalytic layer is enlarged because the catalytic layer is loaded as well on the inner peripheral surface of the mantle, inner peripheral surface which is positioned at the space between a plurality of the supports. Consequently, the present exhaust-gas purifying apparatus can show a higher exhaust-gas purifying ability.

Moreover, the inner peripheral surface of the mantle is not exposed because the catalytic layer is loaded on the inner peripheral surface of the mantle. Therefore, the catalytic layer inhibits the inner peripheral surface of the mantle from being corroded by exhaust gases. As a result, the longevity of the present exhaust-gas purifying apparatus is extended so that the present exhaust-gas purifying apparatus is improved in terms of the sustainable purifying performance.

Note that the inner peripheral surface of the mantle and the surface of the supports on which the catalytic layer is loaded designate the exposed surface in the mantle. Specifically, when the supports are fixed to the mantle in such a state that the outer peripheral surface of the supports adheres to the inner peripheral surface of the mantle, the catalytic layer cannot necessarily be loaded on the contact interface between the supports and the mantle.

The supports can preferably be fixed at intervals of 5 mm or more in the mantle. When the supports are fixed at intervals of 5 mm or more in the mantle, the supports disposed on an upstream side of the flow of exhaust gases can disturb the flow of exhaust gases greatly, and the resulting greatly disturbed flow of exhaust gases can contact more with the surface of the supports disposed on a downstream side of the flow of exhaust gases. As a result, the present exhaust-gas purifying apparatus is upgraded in terms of the exhaust-gas purifying ability. It is desirable that the supports can be fixed at intervals of from 5 to 100 mm, further from 10 to 60 mm in the mantle.

The intervals between the supports designate a distance between the opposite-end surfaces of two of the supports fixed in the mantle, opposite-end surfaces which face to each other. Note that the opposite-end surfaces of the supports are the axial opposite-end surfaces of the supports.

The present exhaust-gas purifying apparatus can preferably further comprise a protective film exhibiting oxidation resistance and formed on the inner peripheral surface of mantle and the surface of the supports. When a protective film exhibiting oxidation resistance is formed on the inner peripheral surface of the mantle and the surface of the supports, the mantle and supports do not contact directly with the catalytic ingredient loaded on the catalytic layer, and accordingly are not corroded by the action of the catalytic ingredient. Moreover, the arrangement effects another advantage that less expensive ordinary steels can be used for the mantle and supports. Specifically, the mantle and supports are not required especially to exhibit characteristics such as oxidation resistance, because the protective film inhibits the catalytic action of the catalytic ingredient. The protective film formed on the inner peripheral surface of the mantle and the surface of the supports is not limited in particular as far as it gives oxidation resistance to the mantle and supports. For example, it is possible to use conventionally known oxidation-resistant films. As for the protective film exhibiting oxidation resistance, it is possible to name films whose major component is nickel or chromium.

The support disposed at the most upstream side of the flow of exhaust gases among the supports can preferably be disposed away from the upstream-side opposite opening of the mantle by a predetermined distance. When the most upstream-side support is disposed away from the upstream-side opposite opening of the mantle by a predetermined distance, it is possible to inhibit the present exhaust-gas purifying apparatus from being melted and damaged even if misfires occur in purifying exhaust gases with the present exhaust-gas purifying apparatus. This is because, when an interval is provided between the upstream-side opposite opening of the mantle and the upstream-side opposite opening of the most upstream-side support, the flame of misfires cannot reach up to some of the supports even if it enters through the upstream-side opposite opening of the mantle. As a result, it is possible to inhibit the exhaust-gas purifying activity of the present exhaust-gas purifying apparatus from degrading. It is desirable that the most upstream-side support can be disposed away from the upstream-side opposite opening of the mantle by a distance of from 0 to 50 mm, further from 0 to 20 mm.

Moreover, the shape of the supports is not limited in particular, and can be determined appropriately depending on specific applications. For example, it is possible to use honeycomb structures in which a flat plate and a corrugated plate comprising a metallic sheet or a metallic foil are laminated alternately, or honeycomb structures in which a flat plate and a corrugated plate are laminated and wound as a roll shape. In this instance, when honeycomb structures are fixed to the mantle, it is possible to securely give the present exhaust-gas purifying apparatus satisfactory mechanical strength. Moreover, the mantle can be formed of metallic sheets whose composition is identical with that of honeycomb structures. In addition, when honeycomb structures are accommodated into the mantle, the mantle can be integrated with the honeycomb structures by known methods. Note that, in all of the specific modes, the thickness of a metallic sheet or a metallic foil can be determined appropriately depending on specific applications. Moreover, the supports can preferably be honeycomb structures, because honeycomb structures can provide the present exhaust-gas purifying apparatus with a wider superficial area.

In addition, as the other shape of the supports, it is possible to exemplify pipes which are formed of a metallic sheet or a metallic foil. Furthermore, it is possible to name pipe shapes which are further provided with a cross-shaped or corrugated extra support plate for demarcating the pipe-shaped inner space.

Moreover, in the present exhaust-gas purifying apparatus, the supports fixed in the mantle can have a shape which differs with each other. For example, when the supports comprise a honeycomb structure, it is possible to use honeycomb structures whose number of cells differs with each other.

The mantle can preferably be an exhaust pipe. When the mantle is an exhaust pipe, it is possible to purify exhaust gases by simply passing exhaust gases through the inside of the mantle.

In the present exhaust-gas purifying apparatus, it is possible to use conventionally known catalytic layers as the catalytic layer. The catalytic layer can preferably comprise a loading layer, and a catalytic ingredient loaded on the loading layer.

The loading layer is used in order to enlarge the contacting area of the present exhaust-gas purifying apparatus with respect to exhaust gases. It is possible to use heat-resistant inorganic oxides which have been used in ordinary exhaust-gas purifying apparatuses. The loading layer can preferably comprise heat-resistant inorganic oxides whose major component is activated alumina. Moreover, the loading layer can preferably further comprise additional oxides such as ceria and zirconia. When the loading layer comprises such additional oxides, it is possible to upgrade the exhaust-gas purifying ability of the present exhaust-gas purifying apparatus. In addition, the thickness of the loading layer is not limited in particular, but can be determined appropriately depending on specific applications.

The catalytic ingredient is loaded on the loading layer. The catalytic ingredient can be loaded on the loading layer after the loading layer is formed. Alternatively, the catalytic ingredient can be loaded on the loading layer by mixing it in a slurry such as activated alumina and coating the resulting mixture on metallic supports. The catalytic ingredient of the present exhaust-gas purifying apparatus is a component which purifies exhaust gases. As for the catalytic ingredient, it is possible to use catalytic ingredients which have been used in ordinary exhaust-gas purifying apparatuses. For example, it is possible to use all of oxidizing catalysts, reducing catalysts and 3-way catalysts as the catalytic ingredient.

Specifically, when at least one member selected from the group consisting of platinum (Pt), palladium (Pd) and rhodium (Rh) is used for the catalytic ingredient, it is possible to purify carbon monoxide (CO), hydrocarbons (HC) and nitrogen oxides (NOₓ) which are contained in exhaust gases efficiently. Moreover, the loading amount of the catalytic ingredient is not limited in particular, but can be determined appropriately depending on specific applications.

### Examples

Hereinafter, the present invention will be described in more detail with reference to specific examples.

As examples of the present invention, the following honeycomb-shaped exhaust-gas purifying apparatuses were manufactured as described below.

### (Example No. 1)

First of all, a pipe was prepared which was composed of SUS304 as per JIS. The pipe had a thickness of 1.0 mm, an inside diameter of 33.0 mm, an outside diameter of 35.0 mm, and an axial length of 60 mm.

Subsequently, two honeycomb structures were prepared which were composed of SUS 304 as per JIS. The honeycomb structures comprised a wall-flow gas distribution cells in an amount of 16 cells/cm² (or 100 cells/inch² approximately) , and had a diameter of 33.0 mm and an axial length of 20 mm.

Then, one of the honeycomb structures was fitted into the pipe through the rear opposite opening of the pipe. Note that the one of the honeycomb structures was fitted into the pipe until the rear-end opposite surface of the honeycomb structure was flush with the rear-end opposite surface of the pipe. The other one of the honeycomb structures was fitted into the pipe through the front opposite opening of the pipe. Note that the other one of the honeycomb structures was fitted into the pipe until the front-end opposite surface of the honeycomb structure was flush with the front-end opposite surface of the pipe.

Thereafter, while keeping the pipe and honeycomb structures in the temporarily fixed manner, a brazing alloy was applied onto the inner peripheral surface of the pipe into which the honeycomb structures were fitted and onto the surface of the honeycomb structures in a thickness of from 10 to 100 µm. The pipe and honeycomb structures with the brazing alloy applied was held at 1,200 °C in a vacuum atmosphere for 1 hour. A protective film was formed on the inner peripheral surface of the pipe and on the surface of the honeycomb structures by thus heating the pipe and honeycomb structures. When the protective film was formed, the pipe and the honeycomb structures were fixed by brazing. Note that the used brazing alloy comprised Cr in an amount of 18% by weight, Si in an amount of 10% by weight, and the balance of Ni and inevitable impurities. The brazing alloy can desirably comprise Cr in an amount of from 10 to 30% by weight, Si in an amount of from 5 to 20% by weight, and the balance of Ni and inevitable impurities. Moreover, the protective film can desirably be formed in a thickness of from 5 to 50 µm, further from 10 to 30 µm on the inner peripheral surface of the pipe and the surface of the honeycomb structures.

In the meantime, a slurry was prepared by uniformly mixing activated alumina, a Ce-Zr composite oxide, a binder, Pt, Rh and water. The activated alumina was γ-Al₂O₃, and was used in an amount of 57.6 parts by weight. The Ce-Zr composite oxide was used in an amount of 32.4 parts by weight. Note that the amount of the Ce-Zr composite oxide could be 27.5 parts by weight by conversion into CeO₂. The binder was used in an amount of 5.8 parts by weight. Pt was used in an amount of 5.8 parts by weight. Rh was used in an amount of 0.7 parts by weight. The water was used in an amount of 250 parts by weight.

The resultant slurry was coated on the inner peripheral surface of the pipe and the surface of the honeycomb structures. Note that the coating amount was 36 g/m². Thereafter, the coated slurry was calcined at 500 °C for 1 hour.

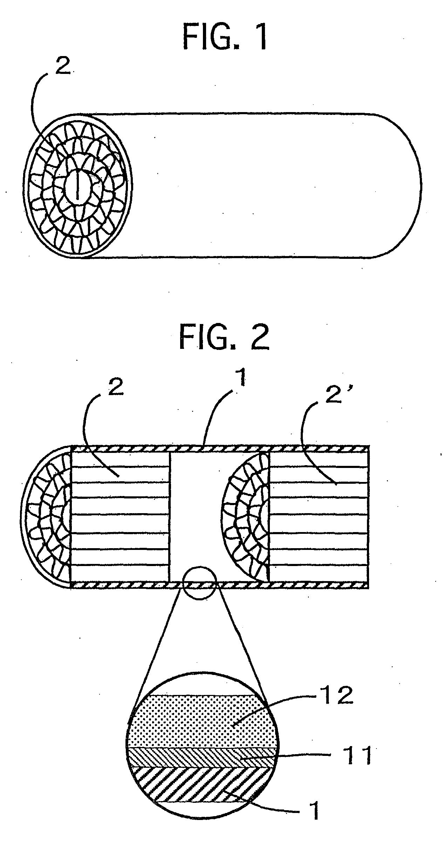

In accordance with the above-described procedures, a honeycomb-shaped exhaust-gas purifying apparatus according to Example No. 1 was manufactured. Figs. 1 and 2 illustrate the arrangement of the honeycomb-shaped exhaust-gas purifying apparatus according to Example No. 1.

As illustrated in Figs. 1 and 2, the honeycomb-shaped exhaust-gas purifying apparatus according to Example No. 1 comprised a mantle 1, a first honeycomb structure 2, a second honeycomb structure 2', a protective film 11, and a catalytic layer 12. The first honeycomb structure 2 was fixed at one of the opposite opening ends of the mantle 1 so as to make the front-end opposite surface of the first honeycomb structure 2 flush with the front-end opposite surface of the mantle 1. The second honeycomb structure 2' was fixed at the other one of the opposite opening ends of the mantle 1 so as to make the rear-end opposite surface of the second honeycomb structure 2' flush with the rear-end opposite surface of the mantle 1, and was disposed at a position away from the first honeycomb structure 2 so as to position the front-end opposite surface of the second honeycomb structure 2' away from the rear-end opposite surface of the first honeycomb structure 2 by a distance of 20 mm. Moreover, the protective film 11 was formed on the exposed inner peripheral surface of the mantle 1 entirely. In addition, the catalytic layer 12 was loaded on the protective film 11.

### (Example No. 2)

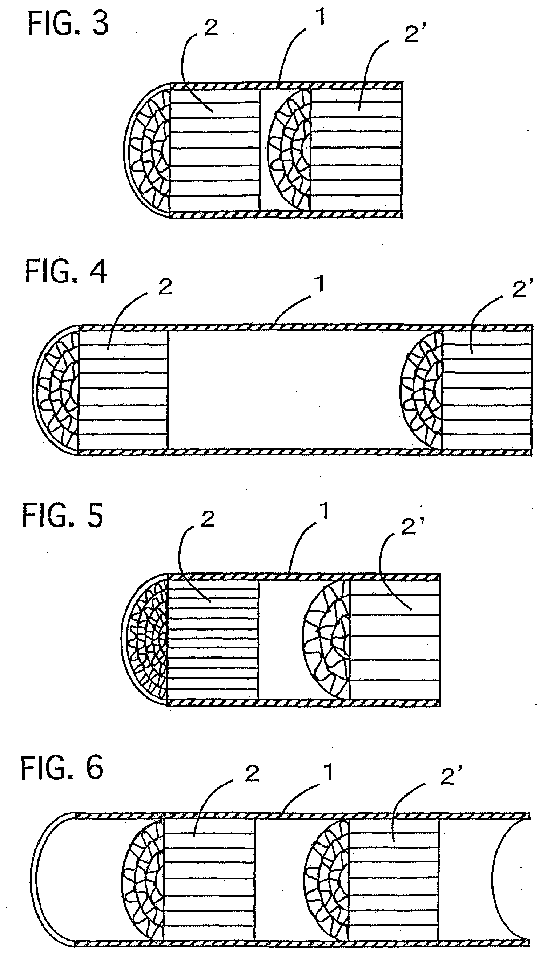

Except that a pipe composed of SUS304 as per JIS was cut to an axial length of 50 mm, a honeycomb-shaped exhaust-gas purifying apparatus according to Example No. 2 was manufactured in the same manner as the honeycomb-shaped exhaust-gas purifying apparatus according to Example No. 1. Fig. 3 illustrates the arrangement of the honeycomb-shaped exhaust-gas purifying apparatus according to Example No. 2.

As can be seen from Fig. 3, the honeycomb-shaped exhaust-gas purifying apparatus according to Example No. 2 comprised a mantle 1, a first honeycomb structure 2, a second honeycomb structure 2', a protective film, and a catalytic layer. The first honeycomb structure 2 was fixed at one of the opposite opening ends of the mantle 1 so as to make the front-end opposite surface of the first honeycomb structure 2 flush with the front-end opposite surface of the mantle 1. The second honeycomb structure 2' was fixed at the other one of the opposite opening ends of the mantle 1 so as to make the rear-end opposite surface of the second honeycomb structure 2' flush with the rear-end opposite surface of the mantle 1, and was disposed at a position away from the first honeycomb structure 2 so as to position the front-end opposite surface of the second honeycomb structure 2' away from the rear-end opposite surface of the first honeycomb structure 2 by a distance of 10 mm. Moreover, the protective film was formed on the exposed inner peripheral surface of the mantle 1 entirely. In addition, the catalytic layer was loaded on the protective film.

### (Example No. 3)

Except that a pipe composed of SUS304 as per JIS was cut to an axial length of 100 mm, a honeycomb-shaped exhaust-gas purifying apparatus according to Example No. 3 was manufactured in the same manner as the honeycomb-shaped exhaust-gas purifying apparatus according to Example No. 1. Fig. 4 illustrates the arrangement of the honeycomb-shaped exhaust-gas purifying apparatus according to Example No. 3.

As can be seen from Fig. 4, the honeycomb-shaped exhaust-gas purifying apparatus according to Example No. 3 comprised a mantle 1, a first honeycomb structure 2, a second honeycomb structure 2', a protective film, and a catalytic layer. The first honeycomb structure 2 was fixed at one of the opposite opening ends of the mantle 1 so as to make the front-end opposite surface of the first honeycomb structure 2 flush with the front-end opposite surface of the mantle 1. The second honeycomb structure 2' was fixed at the other one of the opposite opening ends of the mantle 1 so as to make the rear-end opposite surface of the second honeycomb structure 2' flush with the rear-end opposite surface of the mantle 1, and was disposed at a position away from the first honeycomb structure 2 so as to position the front-end opposite surface of the second honeycomb structure 2' away from the rear-end opposite surface of the first honeycomb structure 2 by a distance of 60 mm. Moreover, the protective film was formed on the exposed inner peripheral surface of the mantle 1 entirely. In addition, the catalytic layer was loaded on the protective film.

### (Example No. 4)

Except that a first honeycomb structure comprising cells in an amount of 32 cells/cm² (or 200 cells/inch² approximately) and a second honeycomb structure comprising cells in an amount of 1.4 cells/cm² (or 40 cells/inch² approximately) were used, a honeycomb-shaped exhaust-gas purifying apparatus according to Example No. 4 was manufactured in the same manner as the honeycomb-shaped exhaust-gas purifying apparatus according to Example No. 1. Note that the honeycomb-shaped exhaust-gas purifying apparatus according to Example No. 4 was used so as to dispose the first honeycomb structure comprising cells in an amount of 32 cells/cm² (or 200 cells/inch² approximately) on an upstream side with respect to the flow of exhaust gases. Fig. 5 illustrates the arrangement of the honeycomb-shaped exhaust-gas purifying apparatus according to Example No. 4.

As can be seen from Fig. 5, the honeycomb-shaped exhaust-gas purifying apparatus according to Example No. 4 comprised a mantle 1, a first honeycomb structure 2 comprising cells in an amount of 32 cells/cm², a second honeycomb structure 2' comprising cells in an amount of 1.4 cells/cm², a protective film, and a catalytic layer. The first honeycomb structure 2 was fixed at one of the opposite opening ends of the mantle 1 so as to make the front-end opposite surface of the first honeycomb structure 2 flush with the front-end opposite surface of the mantle 1. The second honeycomb structure 2' was fixed at the other one of the opposite opening ends of the mantle 1 so as to make the rear-end opposite surface of the second honeycomb structure 2' flush with the rear-end opposite surface of the mantle 1, and was disposed at a position away from the first honeycomb structure 2 so as to position the front-end opposite surface of the second honeycomb structure 2' away from the rear-end opposite surface of the first honeycomb structure 2 by a distance of 20 mm. Moreover, the protective film was formed on the exposed inner peripheral surface of the mantle 1 entirely. In addition, the catalytic layer was loaded on the protective film.

### (Example No. 5)

First of all, a pipe was prepared which was composed SUS304 as per JIS. The pipe had a thickness of 1.0 mm, an inside diameter of 33.0 mm, an outside diameter of 35.0 mm, and an axial length of 100 mm.

Subsequently, two honeycomb structures were prepared in the same manner as Example No. 1.

Then, one of the honeycomb structures was fitted into the pipe through the rear opposite opening of the pipe. Note that the one of the honeycomb structures was disposed in the pipe so as to position the rear-end opposite surface of the honeycomb structure away from the rear-end opposite surface of the pipe by 20 mm. The other one of the honeycomb structures was fitted into the pipe through the front opposite opening of the pipe. Note that the other one of the honeycomb structures was disposed in the pipe so as to position the front-end opposite surface of the honeycomb structure away from the front-end opposite surface of the pipe by 20 mm.

Thereafter, a protective film was formed in the same manner as Example No. 1, and a catalytic layer was loaded on the resulting protective film in the same manner as Example No. 1. Fig. 6 illustrates the arrangement of the honeycomb-shaped exhaust-gas purifying apparatus according to Example No. 5.

As can be seen from Fig. 6, the honeycomb-shaped exhaust-gas purifying apparatus according to Example No. 5 comprised a mantle 1, a first honeycomb structure 2, a second honeycomb structure 2', a protective film, and a catalytic layer. The first honeycomb structure 2 was fixed at one of the opposite opening ends of the mantle 1 so as to position the front-end opposite surface of the first honeycomb structure 2 away from the front-end opposite surface of the mantle 1 by 20 mm. The second honeycomb structure 2' was fixed at the other one of the opposite opening ends of the mantle 1 so as to position the rear-end opposite surface of the second honeycomb structure 2' away from the rear-end opposite surface of the mantle 1 by 20 mm, and was disposed at a position away from the first honeycomb structure 2 so as to position the front-end opposite surface of the second honeycomb structure 2' away from the rear-end opposite surface of the first honeycomb structure 2 by a distance of 20 mm. Moreover, the protective film was formed on the exposed inner peripheral surface of the mantle 1 entirely. In addition, the catalytic layer was loaded on the protective film.

### (Example No. 6)

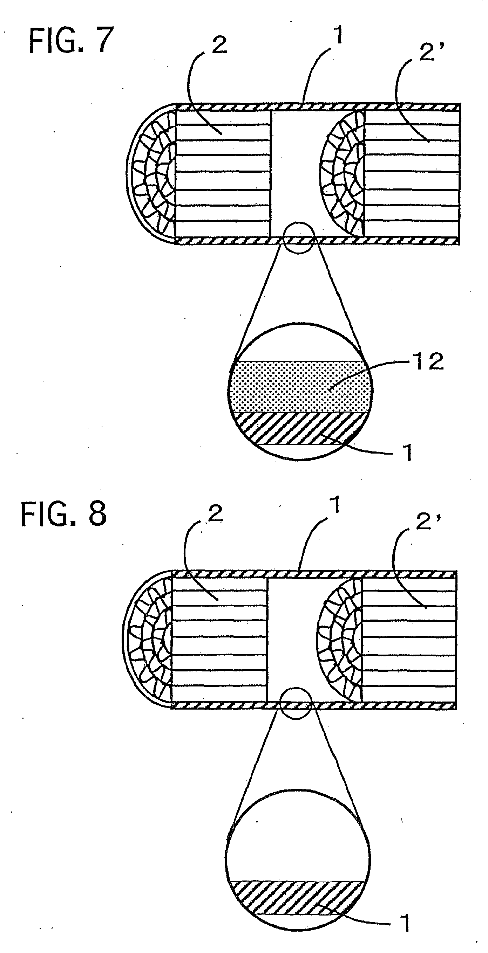

Except that no protective film was formed on the inner peripheral surface of the mantle 1, a honeycomb-shaped exhaust-gas purifying apparatus according to Example No. 6 was manufactured in the same manner as the honeycomb-shaped exhaust-gas purifying apparatus according to Example No. 1. Fig. 7 illustrates the arrangement of the honeycomb-shaped exhaust-gas purifying apparatus according to Example No. 7.

As can be seen from Fig. 7, the honeycomb-shaped exhaust-gas purifying apparatus according to Example No. 6 comprised a mantle 1, a first honeycomb structure 2, a second honeycomb structure 2', and a catalytic layer 12. The first honeycomb structure 2 was fixed at one of the opposite opening ends of the mantle 1 so as to make the front-end opposite surface of the first honeycomb structure 2 flush with the front-end opposite surface of the mantle 1. The second honeycomb structure 2' was fixed at the other one of the opposite opening ends of the mantle 1 so as to make the rear-end opposite surface of the second honeycomb structure 2' flush with the rear-end opposite surface of the mantle 1, and was disposed at a position away from the first honeycomb structure 2 so as to position the front-end opposite surface of the second honeycomb structure 2' away from the rear-end opposite surface of the first honeycomb structure 2 by a distance of 20 mm. Moreover, the catalytic layer 12 was loaded directly on the exposed inner peripheral surface of the mantle 1 entirely.

### (Comparative Example)

Except that no protective film was formed on the inner peripheral surface of the mantle 1, and that the catalytic layer was loaded only on the surface of the honeycomb structures, a honeycomb-shaped exhaust-gas purifying apparatus according to Comparative Example was manufactured in the same manner as the honeycomb-shaped exhaust-gas purifying apparatus according to Example No. 1. Fig. 8 illustrates the arrangement of the honeycomb-shaped exhaust-gas purifying apparatus according to Comparative Example.

As can be seen from Fig. 8, the honeycomb-shaped exhaust-gas purifying apparatus according to Comparative Example comprised a mantle 1, a first honeycomb structure 2, a second honeycomb structure 2', and a catalytic layer. The first honeycomb structure 2 was fixed at one of the opposite opening ends of the mantle 1 so as to make the front-end opposite surface of the first honeycomb structure 2 flush with the front-end opposite surface of the mantle 1. The second honeycomb structure 2' was fixed at the other one of the opposite opening ends of the mantle 1 so as to make the rear-end opposite surface of the second honeycomb structure 2' flush with the rear-end opposite surface of the mantle 1, and was disposed at a position away from the first honeycomb structure 2 so as to position the front-end opposite surface of the second honeycomb structure 2' away from the rear-end opposite surface of the first honeycomb structure 2 by a distance of 20 mm. Moreover, the catalytic layer was loaded only on the surface of the first and second honeycomb structures 2, 2', and SUS304, the material composing the mantle 1, was exposed in the inner peripheral surface of the mantle 1.

### (Assessment)

In order to assess the exhaust-gas purifying ability of the honeycomb-shaped exhaust-gas purifying apparatuses according to Example Nos. 1 through 6 and Comparative Example, the respective honeycomb-shaped exhaust-gas purifying apparatuses were installed to an exhaust system of an actual scooter to purify exhaust gases. Thus, the respective honeycomb-shaped exhaust-gas purifying apparatuses were examined for the exhaust-gas purifying ability.

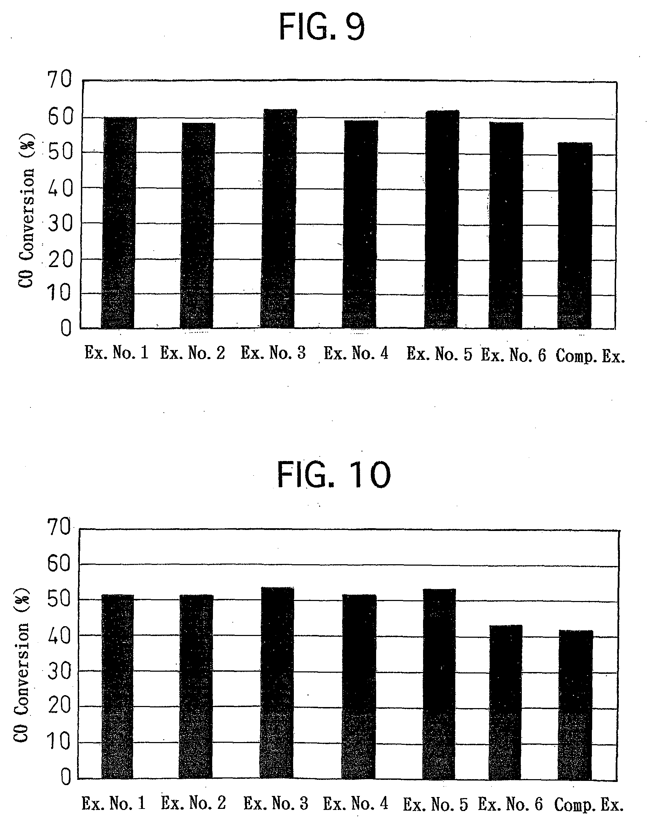

First of all, the respective honeycomb-shaped exhaust-gas purifying apparatuses according to Example Nos. 1 through 6 and Comparative Example were installed to an exhaust system of a scooter on which a 4-stroke engine was boarded. The engine had a displacement of 0.125 L (or 125 cc). The engine was driven under the EC-40 mode (as per ISO6460). In this instance, the respective honeycomb-shaped exhaust-gas purifying apparatuses according to Example Nos. 1 through 6 and Comparative Example were examined for the CO conversion. Fig. 9 illustrates the thus measured CO conversions.

Moreover, the respective honeycomb-shaped exhaust-gas purifying apparatuses according to Example Nos. 1 through 6 and Comparative Example were subjected to a later-described durability test. Thereafter, the respective honeycomb-shaped exhaust-gas purifying apparatuses according to Example Nos. 1 through 6 and Comparative Example were examined for the CO conversion in the same manner as described above. Fig. 10 illustrates the thus measured post durability-test CO conversions.

Note that the durability test to which the honeycomb-shaped exhaust-gas purifying apparatuses were subjected was carried out in the following manner. The honeycomb-shaped exhaust-gas purifying apparatuses were subjected to a heat treatment in which they were held at 900 °C for 25 hours in an alternating rich-lean atmosphere into which CO and O₂ were added at intervals of 1 minute alternately at a flow rate of 200 and 100 mL/min., respectively, while feeding N₂ and H₂O at a fixed flow rate of 8.5 and 1 mL/min., respectively. Moreover, the heat treatment was carried out with a tubular electric furnace.

From Figs. 9 and 10, it is seen that the honeycomb-shaped exhaust-gas purifying apparatuses according to Example Nos. 1 through 6 exhibited a higher CO-purifying ability than the honeycomb-shaped exhaust-gas purifying apparatus according to Comparative Example not only when they were new but also after they were subjected to the durability test.

In the honeycomb-shaped exhaust-gas purifying apparatuses according to Example Nos. 1 through 6, the catalytic layer was loaded more than it was loaded in the honeycomb-shaped exhaust-gas purifying apparatus according to Comparative Example, because the catalytic layer was loaded as well on the inner peripheral surface of the mantle entirely without exposing the inner peripheral surface. As a result, the honeycomb-shaped exhaust-gas purifying apparatuses according to Example Nos. 1 through 6 showed a high CO-purifying ability.

Moreover, it is appreciated that the honeycomb-shaped exhaust-gas purifying apparatuses according to Example Nos. 1 through 5 were inhibited from exhibiting a degraded CO conversion after the durability test. In all of the honeycomb-shaped exhaust-gas purifying apparatuses according to Example Nos. 1 through 5, no corrosion occurred in the mantle, because the catalytic layer was loaded on the oxidation-resistant protective film. Thus, the longevity of the honeycomb-shaped exhaust-gas purifying apparatuses according to Example Nos. 1 through 5 was extended.

On the contrary, in the honeycomb-shaped exhaust-gas purifying apparatus according to Comparative Example, corrosion was observed in the honeycomb structures and mantle. When the honeycomb structures corroded, the corrosion caused the catalytic layer loaded on the surface of the honeycomb structures to come off from the honeycomb structures, and resulted in degrading the exhaust-gas purifying ability of the honeycomb-shaped exhaust-gas purifying apparatus according to Comparative Example. Moreover, in the honeycomb-shaped exhaust-gas purifying apparatus according to Comparative Example, severe corrosion was observed in the inner peripheral surface of the mantle in which the stainless steel composing the mantle was exposed in the space between the honeycomb structures. The severe corrosion had resulted in diminishing the longevity of the honeycomb-shaped exhaust-gas purifying apparatus according to Comparative Example.

Having now fully described the present invention, it will be apparent to one of ordinary skill in the art that many changes and modifications can be made thereto without departing from the spirit or scope of the present invention as set forth herein including the appended claims.

## Claims

1. An exhaust-gas purifying apparatus, comprising :
a metallic mantle (1);
a plurality of metallic supports (2, 2') fixed at predetermined intervals in the mantle (1); and
a catalytic layer (12) loaded on the inner peripheral surface of the mantle (1) and the surface of the supports (2, 2').

2. The exhaust-gas purifying apparatus set forth in claim 1, wherein the supports (2, 2') are fixed at intervals of 5 mm or more in the mantle (1).

3. The exhaust-gas purifying apparatus set forth in claim 1 further comprising a protective film (11) exhibiting oxidation resistance and formed on the inner peripheral surface of the mantle (1) and the surface of the supports (2, 2').

4. The exhaust-gas purifying apparatus set forth in claim 3, wherein the catalytic layer (12) is loaded on the protective film (11).

5. The exhaust-gas purifying apparatus set forth in claim 1, wherein the support disposed at the most upstream side of the flow of exhaust gases among the supports (2, 2') is disposed so as to be away from the upstream-side opposite opening of the mantle (1) by a predetermined distance.

6. The exhaust-gas purifying set forth in claim 1, wherein the supports comprise a honeycomb structure (2, 2').
